# EUROPEAN PATENT APPLICATION

(11) **EP 2 717 206 A1**
(43) Date of publication of application: **09.04.2014**
(21) Application number: 12425161.2
(22) Date of filing: 03.10.2012
(51) Int. Cl.: G06Q 20/14, G06Q 20/18

(54) **Method and device for utilizing apparatuses through a prepaid credit**

(71) Applicant: Kopyas Italia Srl, 03011 Alatri (FR) (IT)
(72) Inventor: Minnucci, Maurizio, 03011 Alatri (FR) (IT)

(57) **Abstract**

Method and device for the utilisation of electric, electronic and electromechanical apparatuses through a pre-paid credit, based on the use of enciphered PIN codes each one containing a respective purchased credit amount and data univocally identifying a specific device, which the purchased credit amount is only valid on.

## Description

### TECHNICAL FIELD

This invention relates to the field of the services for the utilization of electric, electronic and electromechanical apparatuses, subordinated to the availability of a pre-paid credit.

The typical application is that of the utilization of apparatuses under a contract of "*Pay-peruse"* type, in which the user has a credit at his disposal to be able to utilize the apparatuses, and the utilization of the apparatuses reduces his credit, the exhaustion of which inhibits the operation of the apparatus, which becomes available again on recharging with a new credit.

### PRIOR ART

Presently known apparatuses for subordinating the utilization of an apparatus to the availability of a credit are based on two systems:
(I) magnetic cards; microcircuit cards; electronic pendrives, such as for instance card copiers installed in Universities. This system obliges the user to utilize a physical holder of the credit, i.e. cards or pendrives, with the shortcomings involved by the handling, the storing, the demagnetization, the risk of losses or breakings, shiftings for the purchase etc. thereof;
(II) the addition of a credit to the device through a reserved, but not enciphered procedure, to be carried out directly on the device, which provides the access through a password or a means similar to a screen from which it is possible to enter the credit and any other function: the shortcoming subsists in this case that the vendor of the credit cannot allow others the access to the device and is compelled to access directly to any recharge operation with consequent costs and uneasiness for shiftings.

### DISCLOSURE OF THE INVENTION

It is the object of this invention to provide means for subordinating the utilization of an electric or electronic or electromechanical apparatus to the availability of a credit, that overcome said shortcomings.

To achieve such an object this invention is based on a finding made up of a device, endowed with a data processor, with memory means, and with a data-input keyboard and a visual-presentation video display, and advantageously endowed with a module for communications to external world, which may be connected or integrated in electric or electronic or electromechanical apparatuses so as to be able to interact with them in two ways:
(I) enabling or disabling the operativeness: that is, respectively putting them in a state of total availability or in a non-availability or limited-availability state, such as for instance that of a computer which is powered-off or waiting for a password;
(II) intercepting the operativeness thereof, that is counting the elementary operations performed by the apparatus, such as for instance the number of strokes executed by a press, and/or the time of utilization thereof, such as for instance the time of washing cycle of a dishwasher.

The finding holds in the memory thereof a credit which is decreased at each elementary operation executed by the apparatus or in the time of utilization thereof, and on exhaustion of such a credit the device disables the apparatus.

User may rehabilitate the operativeness by purchasing a new credit in the form of a personal identification number or PIN to be entered in the finding through a keyboard on the part of the user or to be transmitted to the finding in the form of a message, that is as a telecharge, through a telecommunications network from the vendor of the PIN.

User may purchase and manipulate the PINs in full autonomy and at any moment, such as for instance through an electronic commerce platform, through a telephone, etc.

The possibility of purchasing a credit via the Internet and to transfer it in real time onto any finding, wherever this one is installed, allows enormous advantages in comparison with present systems and procedures.

Each PIN may be only utilized on the finding used by the purchaser and with the serial number declared in the purchasing stage. The efficacy of the PIN on only one finding allows a free delivery thereof without prejudice for safety and without a danger of utilization on the part of others. A PIN anti-counterfeiting system keeps the vendor of the credit safe from a non-authorized or fraudulent generation thereof. In practice, the recharge through enciphered PINs remotely feasible too eliminates the necessity of manipulating and keeping physical carriers such as pre-paid cards, pendrives etc., with the risks of the loss and deterioration thereof, the operation for the manufacture and the commercialization of the carriers themselves, the shiftings for the purchasing and the selling of the credit, and eliminated the necessity for the vendor of going to the device to start the reserved procedure for recharging the credit which he only knows.

The finding may be embodied in a reduced size and is fit for being connected to any electric, electronic or electromechanical apparatus, such as for instance copiers, dishwashers, presses, lathes, boilers.

It is an advantage of this invention the fact that by virtue thereof the remuneration is allowed of a summit agency that generates and delivers PIN codes for all inventive devices, for instance by adding an extra-charge to the price of the PIN that pays the agency which has generated and delivered it.

The finding may transmit data on the activity of the apparatus, that may feed a software procedure for generating statistics and commercial campaigns. Therefore, the inventive device may become a means for a plurality of marketing and commercial promotion operations.

Therefore, it is the subject-matter of this invention an automated method for providing a service for the utilization of an electric or electronic or electromechanical apparatus that executes elementary operations through a device endowed with programmable data processing means according to enclosed Claims 1 to 6.

It is further the subject-matter of this invention a device according to Claim 7.

It is further the subject-matter of this invention a computer programme according to enclosed Claim 8.

It is further the subject-matter of this invention a data processor according to enclosed claim 9.

It is further the subject-matter of this invention a computer programme according to enclosed Claim 10.

It is further the subject-matter of this invention a device according to enclosed Claim 11.

It is further the subject-matter of this invention a method according to enclosed Claim 12 and 13.

It is further the subject-matter of this invention an electronic commerce platform according to enclosed Claim 14.

It is further the subject-matter of this invention a computer programme according to enclosed

Claim 15.

### BRIEF DESCRIPTION OF THE DRAWINGS

This invention is disclosed in a detailed way with reference to specific examples for carrying out it, only given as a matter of example, absolutely not of restriction, with reference to the enclosed drawing, wherein:

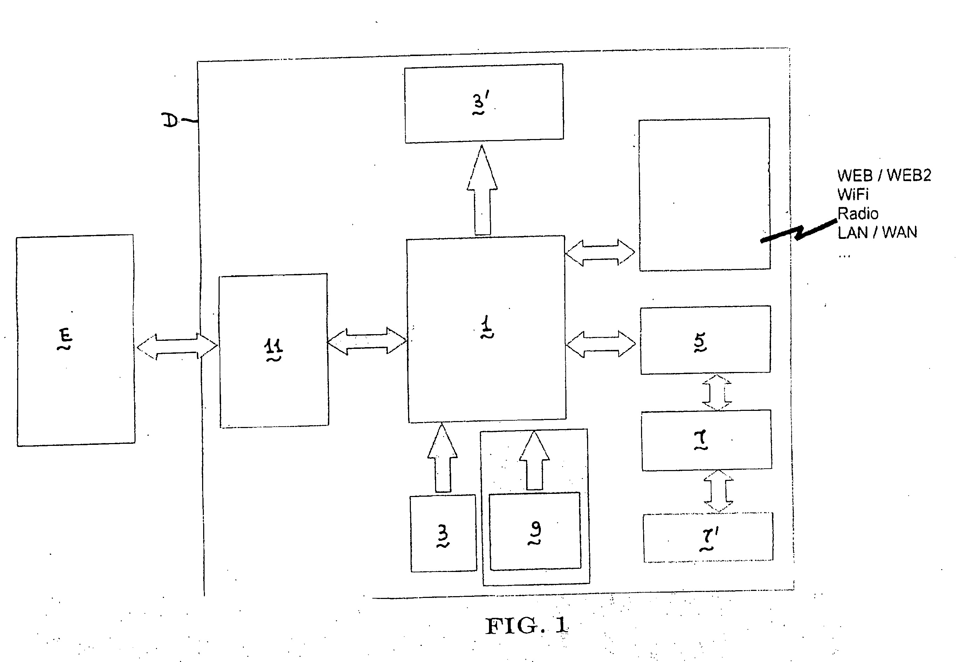

- FIGURE 1 is a block diagram of an inventive device.

### BEST MODES FOR CARRYING OUT THE INVENTION

This invention according to a first aspect is an automated method for providing on the part of vendors to utilizers i.e. users i.e. clients a service for the utilization of an electric or electronic or electromechanical apparatus that executes elementary operations, through a device endowed with programmable data processing means, including data input means; output data presentation means; memory means, in functional communication with the apparatus; which utilization is subordinated to the availability of a credit purchased by said utilizers, including the steps of:
*(a)* generating encrypted personal identification number i.e. PIN codes, starting from, and so including, respective data of identification of the device a of purchased credit amount;
*(b)* providing means for the creation of respective client accounts in the device;
*(c)* providing means for the access on authorization to the user accounts created at Step *(b),* by inputting respective user recognition data;
*(d)* providing means for inputting the encrypted PIN codes generated at Step *(a)* in the device through said user account;
*(e)* registering the PIN codes inputted in the device in the memory means;
*(f)* decrypting the PIN codes inputted in the device for the extraction of the PIN codes of the credit amount data, and registering such a credit in a memory area reserved to Lhe user account through which each PIN has been inputted, so univocally associating such a credit amount to such user account;
*(g)* reducing the amount of the credits present in the memory means according to a reduction plan i.e, credit typology;
*(h)* providing means for the presentation of the credit amount in the respective associated user account;
*(i)* commanding the disabling of the operativeness of the apparatus for one of said accounts when the respective credit amount turns out to be exhausted, and
*(l)* comparing each PIN code inputted with the PIN codes previously utilized and registered in the memory means, refusing the input if it turns out to be equal to one of them, so that each PIN code may be utilized only one time.

It is envisaged that the method may further include the step of:
*(m)* providing means for creating groups of said user accounts, and for accessing thereto on authorization through inputting user recognition data,
and that at Step *(a)* the encrypted PIN codes further contain total credit amount data of said groups of accounts available on the device,
each user being allowed to consume his own credit amount, under the condition that total credit turns out to be sufficient.

For instance a municipal supply officer can enter in the device connected to the copier of the offices twenty user accounts for the twenty employees and assign each one a credit limit of 250 Euro. Each one of them, therefore, will be able to execute copies and prints up to a maximum of 250 Euro, but if the total credit is exhausted, the device will disable the utilization of the copier, no one will be able to utilize the apparatus, independently of the residual credit limit of each one.

It is envisaged that the method may further include the step of:
*(n)* making said device to automatically send messages on events taking place in the apparatus of a malfunction in the apparatus and/or of reduction of said credit amount below a threshold and/or at a clock rate of the quantity of utilization of the apparatus in a time period.

The inventive method so is able to feed with utilization data a software procedure for generating statistics, commercial campaigns etc.

It is envisaged that the method further include the step of:
*(o)* generating PINs containing data for setting the operation of the device according to a credit typology by instructing the execution of a determined plan for reducing the credit amount contained in the PINs themselves.

PINs are dealt with which do not add a credit amount, but set the operation of the device in a transient or a permanent way different from that preset in the device.

For instance such PINs may set for a copier a reduction per printed page of 8 cents instead of 10 preset in the device in order to sell a purchase advantageous commercial formula of 20 Euro PINs, having a promotional discount of 20% for a month.

It is envisaged that at Step *(a)* of the method the PINs further include data of credit purchase date and data of credit lifetime, at the expiration of which the amount of the credit is reduced to zero, to manage low-price credit typologies against a limit of time for the utilization of the credit amount.

So the method is suitable for managing for instance a low-price "*Hot Credit"* to be consumed quickly and a standard-price "*Normal Credit"* having a longer life: this characteristic is very precious to better the functionality of the device, multiply the commercial operations for vendors and optimize the costs for purchasers.

It is further envisaged that the method further includes the step of:
*(p)* generating encrypted personal identification number codes or PINs containing instructions to block the utilization of the apparatus on the part of a user, for the use on the part of vendors to block the utilization of the apparatus on the part of a user in arrears.

The client in arrears is thereafter re-enabled to the utilization on settling outstanding invoices.

Under another aspect, with reference to FIGURE 1, this invention is a device D including in combination:
- programmable data processing means (1), endowed with input/output means (3; 3') for the communication of data with the external world, including keyboard means (3), and means for the visual presentation of data (3'); with clock means (5) and with memory means (7; 7'), in functional communication thereamong;
- apparatus interfacing means (11) for the interfacing with an electric or electronic or electromechanical apparatus (E) , that executes elementary operations, in functional communication with the programmable data processing means (1), and endowed with sensing means for counting the number of elementary operations executed by said apparatus and/ar means for counting the time of utilization thereof, and with means for intervening on said apparatus to enabling/disabling the operativeness thereof, as well as with means for sensing malfunctions of the apparatus;
   the programmable data processing means (1) being programmed to execute Steps *(b)* to *(l)* of the method disclosed above.

The inventive device may be embodied with a microcontroller 1, wherein a control firmware is resident; a keyboard 3 and a display 3' for the dialogue with the user; a clock for managing hour and date 5; a non-volatile working memory 7 and a safety back-up memory 7', and an apparatus interface 11 fit for interfacing microcontroller 1 with an electric, electronic or electromechanical apparatus E. The keyboard may be embodied on the display as a tactile keyboard.

A copy of the pre-paid credit stored in the device may be kept in the safety back-up memory 7'.

The inventive device may be autonomous or integrated in an apparatus E. The interfacing of the device with the apparatus may be carried out by both endowing the device with means for directly sensing signals provided by both the apparatus, such as for instance the signals a printing press sends to the counter thereof per printed sheet, and through an additional component functionally positioned on the apparatus, such as for instance a sensor arranged on the toothed wheel of a cement mixer able to sense the number of revolutions of the drum.

Advantageously, the inventive device may be further equipped with a biometric reader 9 for the recognition of the user suitable for sensing the finger prints, the voice or the retina of the user.

According to another aspect this invention is a computer programme including code means suitable for executing, when run on a computer, steps *(b)* to *(l)* or Steps *(b)* to *(m)* of the inventive method.

According to another aspect this invention is a programmable computer programmed to execute Step *(a)* or *(n)* or *(o)* or *(p)* of the inventive method.

According to another aspect this invention is a computer programme including such code means as to execute Step *(a)* or *(n)* or *(o)* or *(p)* of the inventive method when run on a computer.

It is advantageously envisaged that the inventive device further includes:
- means for interfacing with a telecommunications network (13), including an inter-network of computers, including Internee.

The interfacing means may be embodied for instance through a GSM modem or an Internet board.

According to another aspect this invention is a method for providing an electronic commerce service on the part of a serving computer or server or electronic commerce platform, including memory means, through respective client computers networked thereto, including the steps of:
*(a2)* registering each device according to claim 7 on the platform;
*(b2)* providing means for creating respective user accounts on the platform through said client computers;
*(c2)* providing means for inputting through said user accounts and storing credit data for the purchase, including a credit amount;
*(d2)* providing means for selecting one or more devices according to Claim 6 for the utilization of all or respective parts of said credit, each one for a respective device, contextually with Step *(c2)* or at a subsequent time;
*(e2)* executing Step *(a)* of the method according to Claim 1, 2 or 3 to generate PINS containing the credit data selected at step *(c1)* and presenting such PINs on said user accounts created on the platform.

So, a purchased credit may be utilized immediately or set aside, stored in a memory area, and utilized subsequently in only one time or in more portions, on one or more apparatuses, both proprietary and public. for instance a surveyor mat transfer a credit previously set aside partly on a copier installed in his office and partly on an account of his own of the self-service copier installed in the enquiry hall of the Land Registry Office.

It is envisaged that such a method further includes the step of:
*(f2)* transmitting said PIN codes automatically generated at Step *(e2)* by messages through a telecommunications network to a device according to Claim 9 or to a user thereof, so that this one upon necessity is able to input it manually in the device through said input means of the device.

The messages may be email messages or Short Message Service SMS messages.

According to another aspect this invention is an electronic commerce platform programmed to execute such a method.

Advantageously, such an electronic commerce platform may be endowed with means for receiving messages sent by an inventive device and deliver them to subjects involved in a service for the utilization of an electric or electronic or electromechanical apparatus through a pre-paid credit, including the vendor of the service and the client of the service, including messages bearing the news of a near exhaustion of a credit; for the planning of commercial actions, or to warn about the necessity of technical interventions.

According to another aspect this invention is a computer programme including code means suitable for executing such a method when run on a computer.

This invention has been disclosed and depicted with reference to specific ways of carrying out it, but variations may be made without so departing from the protection scope thereof, which only remains defined by the appended claims.

## Claims

1. An automated method for providing on the part of vendors to utilizers i.e. users i.e. clients a service for the utilization of an electric or electronic or electromechanical apparatus that executes elementary operations, through a device endowed with programmable data processing means, including data input means; output data presentation means; memory means, in functional communication with the apparatus; which utilization is subordinated to the availability of a credit purchased by said utilizers,
including the steps of:
*(a)* generating encrypted personal identification number i.e. PIN codes, starting from, and so including, respective data of identification of said device a of purchased credit amount;
*(b)* providing means for the creation of respective client accounts in said device;
*(c)* providing means for the access on authorization to the user accounts created at Step *(b),* by inputting respective user recognition data;
*(d)* providing means for inputting said encrypted PIN codes generated at Step *(a)* in said device through said user account;
*(e)* registering said PIN codes inputted in the device in said memory means;
*(f)* decrypting said PIN codes inputted in the device for the extraction of the PIN codes of said credit amount data, and registering such a credit in a memory area reserved to the user account through which each PIN has been inputted, so univocally associating such a credit amount to such user account;
*(g)* reducing the amount of said credits present in said memory means according to a reduction plan i.e. credit typology;
*(h)* providing means for the presentation of said credit amount in the respective associated user account;
*(i)* commanding the disabling of the operativeness of said apparatus for one of said accounts when the respective credit amount turns out to be exhausted, and
*(l)* comparing each PIN code inputted with the PIN codes previously utilized and registered in said memory means, refusing the input if it turns out to be equal to one of them,
so that each PIN code may be utilized only one time.

2. The method according to Claim 1, further including the step of:
*(m)* providing means for creating groups of said user accounts, and for accessing thereto on authorization through inputting user recognition data, and wherein at Step *(a)* said encrypted PIN codes further contain total credit amount data of said groups of accounts available on the device,
and allowing each user to consume his own credit amount, under the condition that total credit turns out to be sufficient.

3. The method according to Claim 1, further including the step of:
*(n)* making said device to automatically send messages on events taking place in the apparatus of a malfunction in the apparatus and/or of reduction of said credit amount below a threshold and/or at a clock rate of the quantity of utilization of the apparatus in a time period.

4. The method according to Claim 1, further including the step of:
*(o)* generating PINs containing data for setting the operation of said device according to a credit typology by instructing the execution of a determined plan for reducing the credit amount contained in the PINs themselves.

5. The method according to Claim 1, wherein at Step *(a)* said PINs further include data of credit purchase date and data of credit lifetime, at the expiration of which the amount of the credit is reduced to zero,
to manage low-price credit typologies against a limit of time for the utilization of the credit amount.

6. The method according to Claim 1, further including the step of:
*(p)* generating encrypted personal identification number codes or PINs containing instructions to block the utilization of the apparatus on the part of a user,
for the use on the part of vendors to block the utilization of the apparatus on the part of a user in arrears.

7. A device including in combination:
- programmable data processing means (1), endowed with input/output means (3; 3') for the communication of data with the external world, including keyboard means (3), and means for the visual presentation of data (3'); with clock means (5) and with memory means (7; 7'), in functional communication thereamong;
- apparatus interfacing means (11) for the interfacing with an electric or electronic or electromechanical apparatus (E), that executes elementary operations, in functional communication with said programmable data processing means (1), and endowed with sensing means for counting the number of elementary operations executed by said apparatus and/or means for counting the time of utilization thereof, and with means for intervening on said apparatus to enabling/disabling the operativeness thereof, as well as with means for sensing malfunctions of the apparatus;
said programmable data processing means (1) being programmed to execute steps *(b)* to *(l)* of the method according to Claim 1.

8. A computer programme including code means suitable for executing, when run on a computer, Steps *(b)* to *(l)* of the method according to Claim 1 or Steps *(b)* to *(m)* of the method according to Claim 2.

9. A programmable computer programmed to execute Step *(a)* of a method according to Claim 1 or Step *(n)* of a method according to Claim 3 or Step *(o)* of a method according to Claim 4 or Step *(p)* of a method according to Claim 6.

10. A computer programme including code means suitable for executing Step *(a)* of a method according to Claim 1 or Step *(n)* of a method according to Claim 3 or Step *(o)* of a method according to Claim 4 or Step *(p)* of a method according to Claim 6 when run on a computer.

11. The device according to Claim 7, further including:
- means for interfacing with a telecommunications network (13), including an inter-network of computers, including Internet.

12. A method for providing an electronic commerce service on the part of a serving computer or server or electronic commerce platform, including memory means, through respective client computers networked thereto, including the steps of:
*(a2)* registering each device according to Claim 7 on the platform;
*(b2)* providing means for creating respective user accounts on the platform through said client computers;
*(c2)* providing means for inputting through said user accounts and storing credit data for the purchase, including a credit amount;
*(d2)* providing means for selecting one or more devices according to Claim 6 for the utilization of all or respective parts of said credit, each one for a respective device, contextually with Step *(c2)* or at a subsequent time;
*(e2)* executing Step *(a)* of the method according to Claim 1, 2 or 3 to generate PINs containing the credit data selected at step *(c1)* and presenting such PINs on said user accounts created on the platform.

13. The method according to Claim 12, further including the step of:
*(f2)* transmitting said PIN codes automatically generated at Step *(e2)* by messages through a telecommunications network to a device according to Claim 9 or to a user thereof,
so that this one upon necessity is able to input it manually in the device through said input means of the device.

14. Electronic commerce platform programmed to execute a method according to anyone of Claims 11, 12 or 13.

15. A computer programme including code means suitable for executing, when run on a computer, the method according to anyone of Claims 11, 12 or 13.

## Amended claims

### Amended claims in accordance with Rule 137(2) EPC.

**1.** An automated method for providing on the part of vendors to utilizers i.e. users i.e. clients a service for the utilization of an electric or electronic or electromechanical apparatus that executes elementary operations, through a device endowed with programmable data processing means, including data input means; output data presentation means; memory means, in functional communication with the apparatus; which utilization is subordinated to the availability of a credit purchased by said utilizers,
including the steps of:
*(a)* generating encrypted recharge codes i.e. ERC codes, starting from, and so including, respective data of identification of said device and of a purchased credit amount;
*(b)* providing means for the creation of respective client accounts in said device;
*(c)* providing means for the access on authorization to the user accounts created at Step *(b),* by inputting respective user identification data;
*(d)* providing means for inputting said en-crypted ERC codes generated at Step *(a)* in said device through said user account;
*(e)* registering said ERC codes inputted in the device in said memory means;
*(f)* decrypting said ERC codes inputted in the device for the extraction from the ERC codes of said credit amount data, and registering such a credit in a memory area reserved to the user account through which each ERC has been inputted, so univo-cally associating such a credit amount to such user account;
*(g)* reducing the amount of said credits present in said memory means according to a reduction plan i.e. credit typology;
*(h)* providing means for the presentation of said credit amount in the respective associated user account;
*(i)* commanding the disabling of the operativeness of said apparatus for one of said accounts when the respective credit amount turns out to be exhausted, and
*(l)* comparing each ERC code inputted with the ERC codes previously utilized and registered in said memory means, refusing the input if it turns out to be equal to one of them,
so that each ERC code may be utilized only one time.

**2.** The method according to Claim 1, further including the step of:
*(m)* providing means for creating groups of said user accounts, and for accessing thereto on authorization through inputting user recognition data, and wherein at Step *(a)* said encrypted ERC codes further contain total credit amount data of said groups of accounts available on the device,
and allowing each user to consume his own credit amount, under the condition that total credit turns out to be sufficient.

**3.** The method according to Claim 1, further including the step of:
*(n)* making said device to automatically send messages on events taking place in the apparatus of a malfunction in the apparatus and/or of reduction of said credit amount below a threshold and/or at a clock rate of the quantity of utilization of the apparatus in a time period.

**4.** The method according to Claim 1, further including the step of:
*(o)* generating ERCS containing data for setting the operation of said device according to a credit typology by instructing the execution of a determined plan for reducing the credit amount contained in the ERCS themselves.

**5.** The method according to Claim 1, wherein at Step *(a)* said ERCS further include data of credit purchase date and data of credit lifetime, at the expiration of which the amount of the credit is reduced to zero,
to manage low-price credit typologies against a limit of time for the utilization of the credit amount.

**6.** The method according to Claim 1, further including the step of:
*(p)* generating encrypted recharge codes
or ERCS codes containing instructions to block the utilization of the apparatus on the part of a user,
for the use on the part of vendors to block the utilization of the apparatus on the part of a user in arrears.

**7.** A device including in combination:
- programmable data processing means (1), endowed with input/output means (3; 3') for the communication of data with the external world, including keyboard means (3), and means for the visual presentation of data (3'); with clock means (5) and *(o)* of a method according to Claim 4 or Step *(p)* of a method according to Claim 6.

**10.** A computer programme including code means suitable for executing Step *(a)* of a method according to Claim 1 or Step *(n)* of a method according to Claim 3 or Step *(o)* of a method according to Claim 4 or Step *(p)* of a method according to Claim 6 when run on a computer.

**11.** The device according to Claim 7, further including:
- means for interfacing with a telecommunications network (13), including an inter-network of computers, including Internet.

**12.** A method for providing an electronic commerce service for credits to be used through the device of claim 1 on the part of a serving computer or server or electronic commerce platform, including memory means, through respective client computers networked thereto, including the steps of:
*(a2)* registering each device according to Claim 7 on the platform;
*(b2)* providing means for creating respective user accounts on the platform through said client computers;
*(c2)* providing means for inputting through said user accounts and storing credit data for the purchase, including a credit amount;
*(d2)* providing means for selecting one or more devices according to Claim 1 for the utilization of all or respective parts of said credit, each one for a respective device, contextually with Step *(c2)* or at a subsequent time;
*(e2)* executing Step *(a)* of the method according to Claim 1, 2 or 3 to generate ERCS containing the credit data selected at step *(c1)* and presenting such ERCS on said user accounts created on the platform.

**13.** The method according to Claim 12, further including the step of:
*(f2)* transmitting said ERC codes automatically generated at Step *(e2)* by messages through a telecommunications network to a device according to Claim 9 or to a user thereof,
so that this one upon necessity is able to input it manually in the device through said input means of the device.

**14.** Electronic commerce platform programmed to execute a method according to anyone of Claims 11, 12 or 13.

**15.** A computer programme including code means suitable for executing, when run on a computer, the method according to anyone of Claims 11, 12 or 13.
